# EUROPEAN PATENT APPLICATION

(11) **EP 3 950 490 A1**
(43) Date of publication of application: **09.02.2022**
(21) Application number: 20806142.4
(22) Date of filing: 13.05.2020
(51) Int. Cl.: B63J 3/04, B63J 99/00, H02J 7/34, H02J 3/32, H02J 3/38, H02J 3/46

(54) **POWER SUPPLY SYSTEM, MARINE VESSEL, CONTROL METHOD, AND CONTROL PROGRAM**

(30) Priority: 16.05.2019 JP 2019092951
(71) Applicant: Mitsubishi Heavy Industries Marine Machinery & Equipment Co., Ltd., Nagasaki-shi Nagasaki 850-8610 (JP)
(72) Inventor: KAWANAMI Akira, Nagasaki-shi, Nagasaki 850-8610 (JP)
(74) Representative: Hoffmann Eitle
(86) International application number: PCT/JP2020/019099
(87) International publication number: WO 2020/230814

(57) **Abstract**

An object is to provide a power supply system and a ship, a control method, and a control program that enable efficient power generation using an internal combustion engine. A power supply system (10) of a ship (1) includes a rechargeable battery (11) that is connected to a grid (3), a diesel generator (12) that is connected to the grid (3) and that generates power using an internal combustion engine, and a control device (15) that sets a maximum permissible load according to an amount of charge in the rechargeable battery (11), the maximum permissible load being an upper limit value of output of the diesel generator (12).

## Description

### [Technical Field]

The present invention relates to a power supply system and a ship, a control method, and a control program.

### [Background Art]

For example, on a ship, a diesel generator or the like is connected to a grid (an onboard bus) to which an ship power demand is connected, and power is supplied to a load on the ship (for example, PTL 1).

### [Citation List]

### [Patent Literature]

[PTL 1]
Japanese Unexamined Patent Application, Publication No. 2009-137383

### [Summary of Invention]

### [Technical Problem]

On a ship, a sudden load is sometimes temporarily generated due to use of a bow thruster, for example. Accordingly, a diesel generator is operated in such a way that a maximum output is limited at a time of normal operation when there is no occurrence of a sudden load so that output may be increased at a time of occurrence of a sudden load.

The present invention has been made in view of the above, and an object thereof is to provide a power supply system and a ship, a control method, and a control program that enable efficient power generation using an internal combustion engine.

### [Solution to Problem]

A first aspect of the present invention is a power supply system including a rechargeable battery that is connected to a grid; a generator that is connected to the grid, and that generates power using an internal combustion engine; and a control device that sets a maximum permissible load according to an amount of charge in the rechargeable battery, the maximum permissible load being an upper limit value of output of the generator.

According to the configuration described above, the rechargeable battery and the generator that generates power using the internal combustion engine are connected to the grid, and the maximum permissible load that is the upper limit value of the output of the generator is set according to the amount of charge in the rechargeable battery, and thus, the maximum permissible load of the generator may be appropriately set, and power may be efficiently generated using the internal combustion engine. For example, in the case where the amount of charge in the rechargeable battery is great, a sudden load may be handled also by discharging of the rechargeable battery, and the maximum permissible load of the generator may be set high, and efficiency of power generation by the internal combustion engine may be increased.

With the power supply system described above, the control device may set the maximum permissible load to a first predetermined value in a case where the amount of charge is greater than a required sudden load capacity that is set in advance in relation to a sudden load that is expected, and may set the maximum permissible load to a second predetermined value that is set to a value smaller than the first predetermined value, in a case where the amount of charge is equal to or smaller than the required sudden load capacity.

According to the configuration described above, the maximum permissible load of the generator may be appropriately set according to the amount of charge. Accordingly, fuel efficiency of power generation by the internal combustion engine may be increased.

With the power supply system described above, the control device may set the maximum permissible load to the first predetermined value in a case where the amount of charge is equal to or greater than a threshold that is set in advance, and may set the maximum permissible load to the second predetermined value that is set to a value smaller than the first predetermined value, in a case where the amount of charge is smaller than the amount of charge corresponding to the threshold and equal to or smaller than the required sudden load capacity that is set in advance in relation to a sudden load that is expected.

According to the configuration described above, in the case where the amount of charge is equal to or greater than the threshold that is set in advance, the maximum permissible load is set to the first predetermined value, and in the case where the amount of charge is smaller than the amount of charge corresponding to the threshold and equal to or smaller than the required sudden load capacity that is set in advance in relation to a sudden load that is expected, the maximum permissible load is set to the second predetermined value that is set to a value smaller than the first predetermined value, and thus, the maximum permissible load of the generator may be appropriately set according to the amount of charge. Accordingly, fuel efficiency of power generation by the internal combustion engine may be increased.

The power supply system described above may include a power generation unit that is connected to the grid and the rechargeable battery, and that generates power by heat recovery, where the control device may discharge the rechargeable battery in a case where total output of output from the generator and output from the power generation unit becomes smaller than a required load on the grid side.

According to the configuration described above, the rechargeable battery is discharged in a case where the total output of the output from the generator and the output from the power generation unit that generates power by heat recovery becomes smaller than the required load on the grid side, and thus, a sudden load may be handled using the rechargeable battery.

With the power supply system described above, the control device may charge the rechargeable battery with at least one of the output from the power generation unit and grid power depending on an output state of the power generation unit.

According to the configuration described above, because the rechargeable battery is charged with at least one of the output from the power generation unit and the grid power depending on the output state of the power generation unit, the rechargeable battery may be efficiently charged while taking into account the output state of the power generation unit.

With the power supply system described above, the control device may charge the rechargeable battery with at least one of the output from the power generation unit and the grid power depending on the amount of charge, in a case where the output state of the power generation unit is equal to or greater than predetermined output, and may charge the rechargeable battery with both the output from the power generation unit and the grid power in a case where the output state of the power generation unit is smaller than the predetermined output.

According to the configuration described above, in the case where the output state of the power generation unit is equal to or greater than the predetermined output, the rechargeable battery is charged with at least one of the output from the power generation unit and the grid power depending on the amount of charge, and thus, the rechargeable battery may be efficiently charged while taking into account the amount of charge. In the case where the output state of the power generation unit is smaller than the predetermined output, the rechargeable battery is charged with both the output from the power generation unit and the grid power, and thus, the rechargeable battery may be efficiently charged even when the output state of the power generation unit is smaller than the predetermined output.

The power supply system described above may include an auxiliary generator that is connected to the grid, and the control device may activate the auxiliary generator in a case where the amount of charge falls to or below a required sudden load capacity that is set in advance in relation to a sudden load that is expected.

According to the configuration described above, the auxiliary generator is activated in a case where the amount of charge in the rechargeable battery falls to or below the required sudden load capacity that is set in relation to a sudden load that is expected in advance. Because activation of the auxiliary generator takes time, the sudden load is handled by the internal combustion engine when activation of the auxiliary generator is not complete. In a case where activation of the auxiliary generator is completed before occurrence of a sudden load, the sudden load may be handled by the internal combustion engine and the auxiliary generator.

With the power supply system described above, the control device may set an upper limit value of output of the auxiliary generator to be equivalent to the maximum permissible load of the generator.

According to the configuration described above, the auxiliary generator may also be efficiently operated in the same manner as the generator.

With the power supply system described above, capacity of the auxiliary generator may be smaller than capacity of the generator.

According to the configuration described above, more appropriate capacity may be achieved for the auxiliary generator.

A second aspect of the present invention is a ship including the power supply system described above.

A third aspect of the present invention is a control method of a power supply system including a rechargeable battery that is connected to a grid, and a generator that is connected to the grid and that generates power using an internal combustion engine, the control method including setting a maximum permissible load according to an amount of charge in the rechargeable battery, the maximum permissible load being an upper limit value of output of the generator.

A fourth aspect of the present invention is a control program of a power supply system including a rechargeable battery that is connected to a grid, and a generator that is connected to the grid and that generates power using an internal combustion engine, the control program being for causing a computer to perform a process of setting a maximum permissible load according to an amount of charge in the rechargeable battery, the maximum permissible load being an upper limit value of output of the generator.

### [Advantageous Effects of Invention]

The present invention achieves an effect of enabling efficient power generation using an internal combustion engine.

### [Brief Description of Drawings]

[Fig. 1]

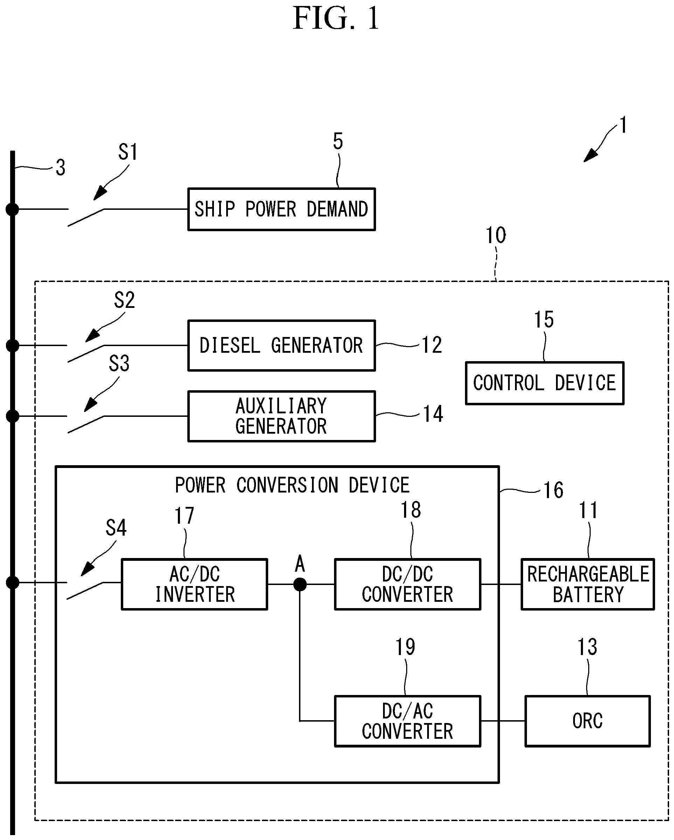

   Fig. 1 is a diagram showing a schematic configuration of a ship provided with a power supply system according to an embodiment of the present invention.
[Fig. 2]

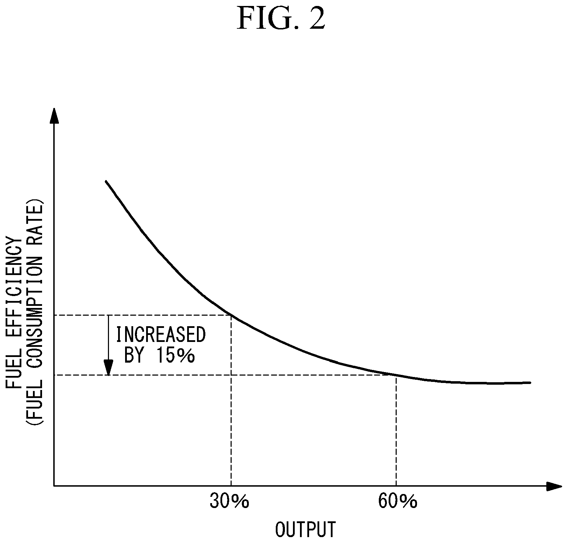

   Fig. 2 is a diagram showing an example of a relationship between output and fuel consumption of a diesel generator.
[Fig. 3]

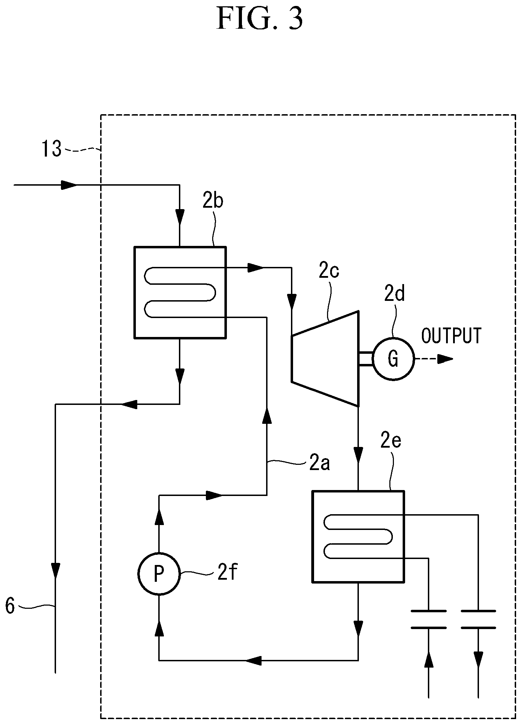

   Fig. 3 is a diagram showing a schematic configuration of an ORC according to an embodiment of the present invention.
[Fig. 4]

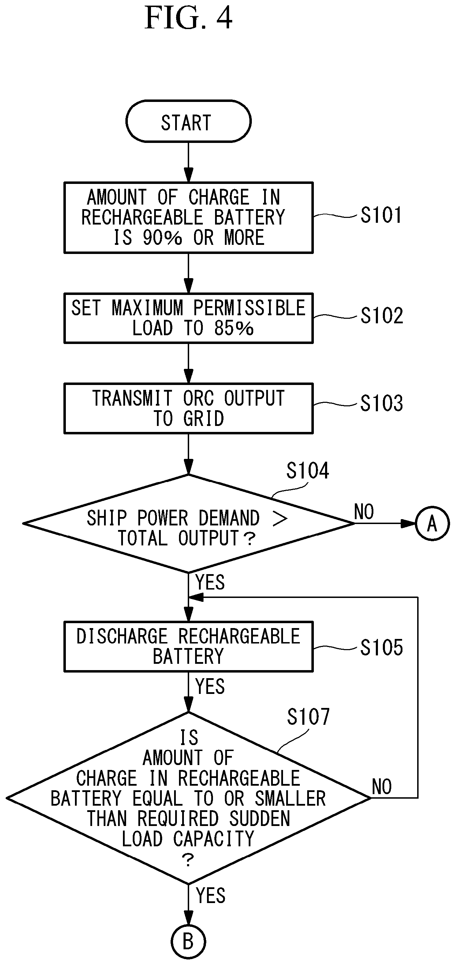

   Fig. 4 is a diagram showing a flowchart of control of the power supply system by a control device according to an embodiment of the present invention.
[Fig. 5]

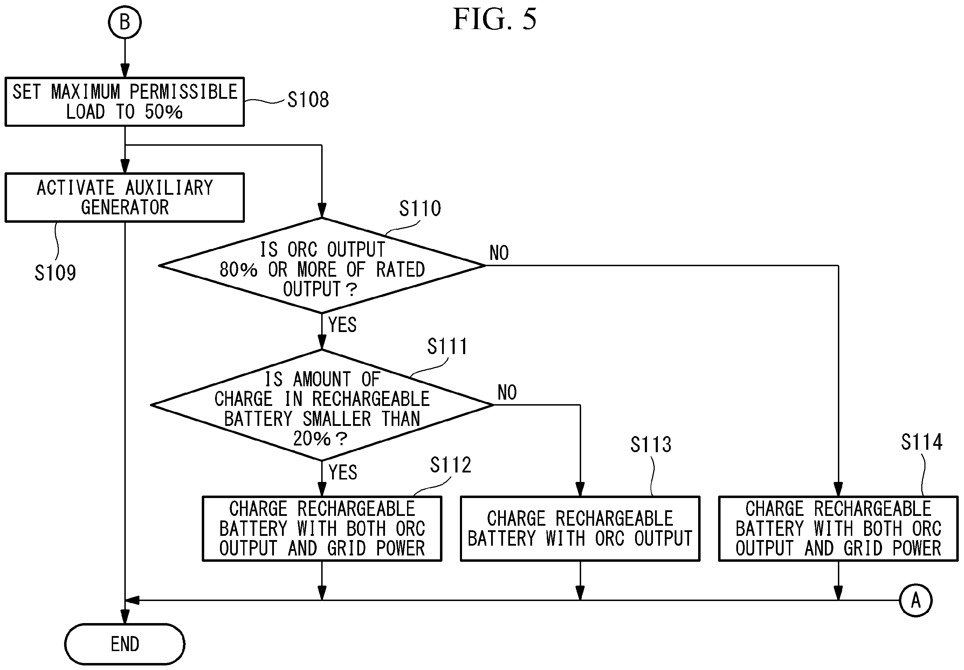

   Fig. 5 is a diagram showing a flowchart of control of the power supply system by the control device according to an embodiment of the present invention.
[Fig. 6]

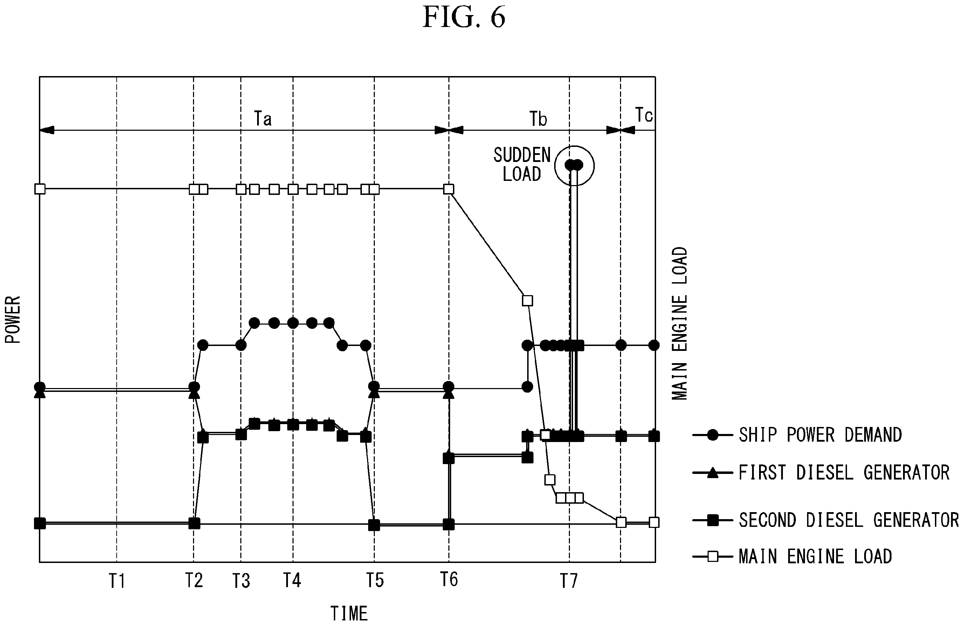

   Fig. 6 is a diagram showing example operation of a ship according to Reference Example.
[Fig. 7]

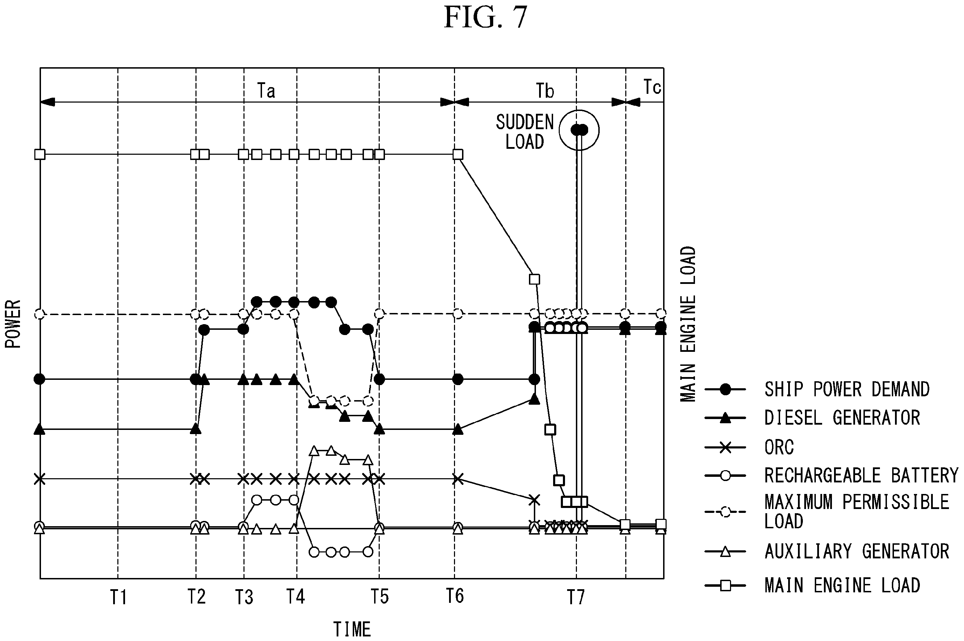

   Fig. 7 is a diagram showing example operation of the ship according to an embodiment of the present invention.

### [Description of Embodiments]

Hereinafter, an embodiment of a power supply system and a ship, a control method, and a control program according to the present invention will be described with reference to the drawings.

In the present embodiment, a case is described where a power supply system 10 is applied to a ship, but the power supply system 10 may be applied to a device and the like where a sudden change in load is expected, without being limited to a ship.

Fig. 1 is a diagram showing a schematic configuration of a ship 1 provided with the power supply system 10 according to an embodiment of the present invention. As shown in Fig. 1, the power supply system 10 according to the present embodiment includes, as main elements, a rechargeable battery 11, a diesel generator (a generator) 12, an ORC (a power generation unit) 13, an auxiliary generator 14, and a control device 15. Each appliance supplies power to a load (an ship power demand) 5 on the ship via a grid (an onboard power grid) 3. That is, power required by a load connected to the grid 3 (required load on the grid 3 side (required onboard power)) is covered by the power supply system 10. A connection state may be controlled by a switch gear S1 between the ship power demand 5 and the grid 3.

The ship power demand 5 is required power needed by an appliance that performs a predetermined operation, process or the like by consuming power from the grid 3, and includes appliances such as a power grid that is constantly (or for a long time) in operation during sailing, a bow thruster that is temporarily operated, and the like. The bow thruster is an apparatus for moving the ship 1 in a lateral direction, and is used for a short time at the time of approaching or leaving a shore, for example. The present embodiment cites the bow thruster as an example of an appliance that is temporarily operated (an appliance that generates a sudden load), but such an appliance is not limited to the bow thruster as long as it temporarily (for a short time) generates a load that exceeds the normal ship power demand 5 (for example, a load that exceeds a rated load of the diesel generator 12).

The rechargeable battery 11 is connected to the grid 3. Specifically, the rechargeable battery 11 is connected to the grid 3 via a power conversion device 16. The rechargeable battery 11 is provided to be capable of swiftly discharging in response to a sudden load on the ship. A sudden load is a load that is generated when an appliance that is used for a short time (a predetermined period of time), such as the bow thruster, is operated. The sudden load may also mean a temporary increase in load without being limited to the above. The rechargeable battery 11 is capable of immediately discharging power that is stored, and thus, is capable of supplementing power in response to a sudden load.

The rechargeable battery 11 is a secondary battery such as a lithium-ion battery, a lead-acid battery or a nickel-metal hydride battery, for example. As the rechargeable battery 11, a lithium-ion battery is desirably used due to high output density and energy density. A measurement instrument for measuring an amount of charge is provided for the rechargeable battery 11, and the amount of charge is used by the control device 15.

The power conversion device 16 is a device that connects the grid 3 and the rechargeable battery 11 (and the ORC 13 described later), and that converts power. The power conversion device 16 includes a converter (a bidirectional DC/DC converter) 18 that is connected to the rechargeable battery 11, and is connected to the grid 3 via an inverter (a bidirectional AC/DC inverter) 17. A switch gear S4 is provided between the inverter 17 and the grid 3 such that a connection state can be controlled. That is, in the case where the rechargeable battery 11 is to be discharged, a direct voltage output from the rechargeable battery 11 is adjusted by the converter 18, and a direct voltage output from the converter 18 is converted, by the inverter 17, to an alternating voltage at a frequency appropriate for the grid 3 side. The inverter 17 and the converter 18 are bidirectional, and thus, in the case where the rechargeable battery 11 is to be charged, an alternating voltage of the grid 3 is converted into a direct voltage by the inverter 17 and the voltage is adjusted by the converter 18 to be supplied to the rechargeable battery 11. As described later, the ORC 13 is connected, via a converter (a DC/AC converter) 19, to a point A on a line where a direct voltage between the inverter 17 and the converter 18 flows, such that power generated by the ORC 13 is supplied. The power conversion device 16 is controlled by the control device 15 described later.

A configuration of the power conversion device 16 is not limited to the configuration described above. That is, the configuration is not limited to that shown in Fig. 1 as long as the rechargeable battery 11 and the ORC 13 can be connected to the grid 3. For example, the rechargeable battery 11 and the ORC 13 may each be connected to the grid 3 via a converter and an inverter.

The diesel generator (the generator) 12 is connected to the grid 3, and generates power by using an internal combustion engine. Power generated by the diesel generator 12 is output to the grid 3, and is supplied to the ship power demand 5. The present embodiment describes a case where a diesel power generation type is used as the generator, but the diesel power generation type is not restrictive as long as power can be generated using an internal combustion engine that obtains mechanical work by burning fuel. A connection state may be controlled by a switch gear S2 between the diesel generator 12 and the grid 3.

A maximum permissible load is set for the diesel generator 12 by the control device 15 described later, and power is generated with the set maximum permissible load as an upper limit value of output. Fig. 2 is a diagram showing a relationship between output and fuel consumption of the diesel generator 12. A horizontal axis in Fig. 2 is the output (in kW, for example) of the diesel generator 12, and a vertical axis is the fuel consumption (in g/kWh, for example). Fig. 2 is an example of the relationship between the output and the fuel consumption of the diesel generator 12. As shown in Fig. 2, with diesel power generation, higher output achieves lower fuel consumption (fuel consumption rate), and thus enables power generation at an operating point with good fuel efficiency. For example, in Fig. 2, the fuel efficiency at a load of 60% is increased by about 15% than for a load of 30%. As described later, because an appropriate maximum permissible load is set by the control device 15, the output may be appropriately increased, and power generation efficiency may be increased.

The ORC (the power generation unit) 13 is connected to the grid 3 and the rechargeable battery 11, and the ORC 13 generates power by heat recovery. In the present embodiment, the ORC (Organic Rankine Cycle System) is described as the power generation unit, but the power generation unit is not limited to the ORC as long as power is generated by heat recovery.

Fig. 3 is a diagram showing an example schematic configuration of the ORC 13. The ORC 13 is a power generation unit that generates power with an organic heating medium as a heat source. The ORC 13 uses jacket cooling water to which heat generated by combustion of diesel fuel by a propulsion main engine (not shown) is transmitted, and generates power with the jacket cooling water as a heat source by exchanging heat between the jacket cooling water and the organic heating medium (heat recovery). The heat source is not limited to the jacket cooling water, and exhaust heat of an air cooler, exhaust gas, or an auxiliary machine may alternatively be used. As shown in Fig. 3, the ORC 13 includes an organic fluid circulation flow line 2a, an evaporator 2b, a power turbine 2c, a generator 2d, a condenser 2e, and a circulation pump 2f. The configuration of the ORC 13 is not limited to the one in Fig. 3.

The propulsion main engine is a main engine (a main machine) that generates a propulsive force for the ship 1, and is an internal combustion engine that burns at least one of fuel oil and fuel gas as main fuel, together with scavenging air. The propulsion main engine includes, on the outside of an engine cylinder, a water jacket that is a path where cooling water flows. The propulsion main engine cools a periphery of the water jacket by guiding cooling water flowing in from a cooling water inlet to the water jacket, and discharges the cooling water from a cooling water outlet into a cooling water circulation line 6. After cooling the propulsion main engine, the cooling water flows in from the cooling water circulation line 6, passes through the evaporator 2b and exchanges heat with an organic fluid circulating in the organic fluid circulation flow line 2a, and is supplied to the cooling water circulation line 6.

The organic fluid circulation flow line 2a is a path for circulating the organic fluid (a working fluid; for example, an organic heating medium) that is to exchange heat with the jacket cooling water in the propulsion main engine circulating in the cooling water circulation line 6. As the organic fluid, a fluid with a boiling point lower than that of water is used. Accordingly, the organic fluid circulating in the organic fluid circulation flow line 2a evaporates by exchanging heat with high-temperature cooling water (at about 85°C, for example). As the organic fluid with a boiling point lower than that of water, low molecular weight hydrocarbon such as isopentane, butane or propane, or a refrigerant such as R134a or R245fa may be used.

The evaporator 2b is a device that evaporates the organic fluid by causing heat to be exchanged between the jacket cooling water in the propulsion main engine flowing in the cooling water circulation line 6 and the organic fluid. The evaporator 2b causes the organic fluid flowing in from the circulation pump 2f, via the organic fluid circulation flow line 2a, to evaporate, and also, supplies the evaporated organic fluid to the power turbine 2c.

The power turbine 2c is a device that is rotated by the organic fluid that is in a gas phase after being evaporated by the evaporator 2b. The power turbine 2c includes a rotor shaft (not shown) that is coupled to the generator 2d, and transmits a rotary power of the rotor shaft to the generator 2d. The organic fluid that performed a work of providing the rotary power to the power turbine 2c is supplied to the condenser 2e after being discharged from the power turbine 2c.

The generator 2d is a device that generates power by the rotary power from the rotor shaft transmitted from the power turbine 2c. Power generated by the generator 2d is supplied to the grid 3 and the rechargeable battery 11 as output from the ORC 13.

The condenser 2e is a device that cools the organic fluid discharged from the power turbine 2c with cooling water (such as seawater), and that condenses the organic fluid in the gas phase into the organic fluid in a liquid phase. The organic fluid in the liquid phase that is obtained by being condensed by the condenser 2e is supplied to the circulation pump 2f through the organic fluid circulation flow line 2a.

The circulation pump 2f is a device that feeds, under pressure, the organic fluid in the liquid phase that is supplied from the condenser 2e through the organic fluid circulation flow line 2a, to the evaporator 2b. Thanks to the circulation pump 2f feeding the organic fluid under pressure, the organic fluid circulates through the organic fluid circulation flow line 2a in the order of the evaporator 2b, the power turbine 2c, and the condenser 2e. An amount of discharge by which the circulation pump 2f discharges the organic fluid is controlled by the control device 15, for example.

As shown in Fig. 1, the ORC 13 is connected to the grid 3 and the rechargeable battery 11 via the power conversion device 16. Specifically, output of the ORC 13 is connected to a point between the inverter 17 and the converter 18 (the point A in a section where the direct voltage flows) via the converter (the DC/AC converter) 19. That is, the alternating voltage output from the ORC 13 is converted into direct voltage by the converter 19, and is supplied to the point A. The output of the ORC 13 is output to the grid 3 via the inverter 17, and is supplied to the rechargeable battery 11 via the converter 18. The ORC 13 merely outputs power, and thus, the converter 19 does not have to be bidirectional. By connecting the ORC 13 and the rechargeable battery 11 in the manner of the power conversion device 16 in Fig. 1, the number of inverters and converters may be reduced in relation to supply of power from the ORC 13 to the rechargeable battery 11, and a loss caused by power conversion may be reduced.

The auxiliary generator 14 is connected to the grid 3. The auxiliary generator 14 is a generator that generates power by the internal combustion engine, and is a generator of a diesel power generation type, for example. Capacity of the auxiliary generator 14 is smaller than capacity of the diesel generator 12. Compared with a case where the capacity of the auxiliary generator 14 is the same as that of the main diesel generator 12, when the capacity of the auxiliary generator 14 is smaller, the maximum permissible load may be set high, and operation in a high load region with good fuel efficiency is enabled. The auxiliary generator 14 is connected to the grid 3, and is capable of supplying power to the grid 3. The auxiliary generator 14 is controlled by the control device 15 described later. A connection state may be controlled by a switch gear S3 between the auxiliary generator 14 and the grid 3.

The control device 15 is a device that controls each appliance in the power supply system 10.

For example, the control device 15 includes a central processing unit (CPU), a memory such as a random access memory (RAM), a computer-readable recording medium and the like that are not shown. Steps in a series of processes for implementing various functions described later are recorded in the recording medium or the like in the form of programs, and various functions described later are implemented by the CPU loading the programs into the RAM or the like and performing processing/arithmetic processes on information. The programs may be installed in a ROM or other storage media in advance, may be provided by being stored in a computer-readable storage medium, or may be distributed via wired or wireless communication means, for example. A computer-readable storage medium is a magnetic disk, a magneto-optical disk, a CD-ROM, a DVD-ROM, a semiconductor memory or the like.

The control device 15 sets the maximum permissible load that is the upper limit value of output of the diesel generator 12, according to the amount of charge in the rechargeable battery 11. The control device 15 sets the maximum permissible load to a first predetermined value in a case where the amount of charge is greater than a required sudden load capacity that is set in advance in relation to a sudden load that is expected, and sets the maximum permissible load to a second predetermined value that is set to a value smaller than the first predetermined value, in a case where the amount of charge is equal to or smaller than the required sudden load capacity. Specifically, the control device 15 sets the maximum permissible load to the first predetermined value in a case where the amount of charge in the rechargeable battery 11 is equal to or greater than a threshold that is set in advance, and sets the maximum permissible load to the second predetermined value that is set to a value smaller than the first predetermined value, in a case where the amount of charge is smaller than the amount of charge corresponding to the threshold and equal to or smaller than the required sudden load capacity that is set in advance in relation to a sudden load that is expected. That is, the control device 15 sets the maximum permissible load of the diesel generator 12 high in a case where the amount of charge in the rechargeable battery 11 is great, and sets the maximum permissible load of the diesel generator 12 low in a case where the amount of charge in the rechargeable battery 11 is small. A condition for setting the maximum permissible load to the first predetermined value may be that the amount of charge in the rechargeable battery 11 is greater than the required sudden load capacity, or that the amount of charge in the rechargeable battery 11 is equal to or greater than the amount of charge corresponding to the required sudden load capacity and equal to or greater than the threshold that is set in advance.

The present embodiment describes a case where the threshold set in advance in relation to the amount of charge in the rechargeable battery 11 is 90% (where full amount of charge is 100%), the first predetermined value set in relation to the maximum permissible load of the diesel generator 12 is 85% (where rated output of the diesel generator 12 is 100%), and the second predetermined value is 50%. Specific values of the threshold, the first predetermined value, and the second predetermined value are not limited to those mentioned above.

The threshold related to the amount of charge in the rechargeable battery 11 is set based on an amount of power required by an appliance that is constantly (or for a long time) in operation, an appliance that is temporarily operated (a sudden load that is expected), and the like. That is, when power is stored in the rechargeable battery 11 at an amount of charge equal to or greater than the threshold, an expected ship power demand 5 may be more reliably handled by discharging of the rechargeable battery 11. The first predetermined value related to the maximum permissible load of the diesel generator 12 is set such that operation may be performed at an operating point with good fuel efficiency, according to specifications of the diesel generator 12, or is set, in other words, in a predetermined operating point range with good fuel efficiency. The second predetermined value related to the maximum permissible load of the diesel generator 12 is set lower than the first predetermined value and in such a way that a sudden load may be handled, according to the specifications of the diesel generator 12. That is, the second predetermined value is set such that output of the diesel generator 12 is limited in preparation for a sudden load.

The ship 1 includes a bow thruster that is used in a case of approaching or leaving a shore, for example. The bow thruster is included in the ship power demand 5 connected to the grid 3, and temporarily requires great power at the time of operation. That is, when the bow thruster is operated, a sudden load is generated. If power is to be supplemented by the diesel generator 12 at a time of occurrence of such a sudden load, the diesel generator 12 has to be operated at a low load in a state where there is no occurrence of the sudden load. In other words, the diesel generator 12 has to be operated with limited output in preparation for a sudden load. In such a case, the diesel generator 12 cannot be operated at an operating point with good fuel efficiency, and is thus in a state where fuel efficiency is poor. Accordingly, with the power supply system 10 according to the present embodiment, the rechargeable battery 11 is provided such that a sudden load may be handled, and discharge is enabled in a case of occurrence of a sudden load.

Then, the control device 15 assumes that, when the amount of charge in the rechargeable battery 11 is at or greater than the threshold that is set in advance, a sudden load may be handled by discharging of the rechargeable battery 11, and sets the maximum permissible load that is the upper limit value of output of the diesel generator 12 to the first predetermined value (85%) greater than the second predetermined value. When the maximum permissible load is set high, the diesel generator 12 may be operated at an operating point with good efficiency.

The control device 15 assumes that, when the amount of charge in the rechargeable battery 11 is equal to or smaller than the required sudden load capacity that is set in advance, a sudden load is possibly not handled by discharging of the rechargeable battery 11, and sets the maximum permissible load that is the upper limit value of output of the diesel generator 12 to the second predetermined value (50%) smaller than the first predetermined value. Accordingly, even in a case where the amount of charge in the rechargeable battery 11 is smaller than the threshold, because the maximum permissible load of the diesel generator 12 is set smaller than the first predetermined value, power may be covered by the rechargeable battery 11 and the diesel generator 12 even in a case of occurrence of a sudden load. The required sudden load capacity corresponds to capacity smaller than the threshold (90%) related to the first predetermined value. That is, the amount of charge corresponding to the required sudden load capacity is smaller than the amount of charge corresponding to the threshold. Accordingly, when the amount of charge in the rechargeable battery 11 reaches or exceeds the threshold and the maximum permissible load is set to the first predetermined value, even when discharge is performed thereafter and the amount of charge in the rechargeable battery 11 is reduced, the maximum permissible load is set to the first predetermined value if the amount of charge in the rechargeable battery 11 is equal to or greater than the required sudden load capacity.

The control device 15 discharges the rechargeable battery 11 when total output of output from the diesel generator 12 and output from the ORC 13 becomes smaller than a required load (the ship power demand 5) on the grid 3 side. That is, the control device 15 discharges the rechargeable battery 11 and supplies also the power of the rechargeable battery 11 to the grid 3, in a case where the required load on the grid 3 side can no longer be handled by the diesel generator 12 and the ORC 13. In this manner, the ship power demand 5 may be handled in various ways. Because output of the diesel generator 12 and output of the ORC 13 are preferentially used for the ship power demand 5, discharge of the rechargeable battery 11 may be suppressed, and reduction in the amount of charge in the rechargeable battery 11 may be suppressed.

In the case where the rechargeable battery 11 is discharged, a sudden load is possibly not handled by the rechargeable battery 11 and the diesel generator 12. Accordingly, the control device 15 activates the auxiliary generator 14 in a case where the amount of charge in the rechargeable battery 11 falls to or below the required sudden load capacity that is set in advance in relation to a sudden load that is expected. The required sudden load capacity is an amount of power that is necessary at a time of occurrence of a sudden change in load that is expected in advance. That is, a sudden load may be handled by discharging of the rechargeable battery 11 when the amount of charge in the rechargeable battery 11 is equal to or greater than the required sudden load capacity. For example, the required sudden load capacity is set based on an amount of power that is required to temporarily operate an appliance (the bow thruster) that is to be temporarily operated.

That is, in the case where the amount of charge in the rechargeable battery 11 falls to or below the required sudden load capacity, a sudden load may not be handled by the rechargeable battery 11 and the diesel generator 12. Accordingly, the control device 15 activates the auxiliary generator 14 in a case where the amount of charge in the rechargeable battery 11 falls to or below the required sudden load capacity. Because activation of the auxiliary generator 14 takes time, a sudden load is handled by the diesel generator 12 (where the maximum permissible load is set to the second predetermined value) when activation of the auxiliary generator 14 is not complete. In a case where activation of the auxiliary generator 14 is completed before occurrence of a sudden load, the sudden load may be handled by the diesel generator 12 and the auxiliary generator 14. The auxiliary generator 14 also operates at an operating point with good efficiency, and thus, an upper limit value of output of the auxiliary generator 14 is set based on the maximum permissible load of the diesel generator 12. Specifically, the upper limit value of output of the auxiliary generator 14 is set to a value equivalent to that of the maximum permissible load of the diesel generator 12. For example, in the case where the maximum permissible load of the diesel generator 12 is set to 50%, the upper limit value of the output of the auxiliary generator 14 is set to 50%, where rated output of the auxiliary generator 14 is 100%.

The control device 15 charges the rechargeable battery 11 with at least one of output from the ORC 13 and grid power depending on an output state of the ORC 13. Specifically, the control device 15 charges the rechargeable battery 11 with at least one of the output from the ORC 13 and the grid power depending on the amount of charge, in a case where the output state of the ORC 13 is at or greater than predetermined output, and charges the rechargeable battery 11 with both the output from the ORC 13 and the grid power in a case where the output state of the ORC 13 is smaller than the predetermined output. The predetermined output is 80% (where rated output of output of the ORC 13 is 100%), for example.

In a case where the output state of the ORC 13 is at or greater than the predetermined output, the control device 15 refers to the amount of charge in the rechargeable battery 11, and charges the rechargeable battery 11 using both the output from the ORC 13 and the grid power in a case where the amount of charge in the rechargeable battery 11 is smaller than a lower limit value that is set in advance (such as 20%). Accordingly, in a case where the output state of the ORC 13 is sufficient, and the amount of charge in the rechargeable battery 11 is small, the rechargeable battery 11 may be swiftly charged with both the output from the ORC 13 and the grid power. In a case where the output state of the ORC 13 is at or greater than the predetermined output, the control device 15 refers to the amount of charge in the rechargeable battery 11, and charges the rechargeable battery 11 using the output from the ORC 13 in a case where the amount of charge in the rechargeable battery 11 is at or greater than the lower limit value that is set in advance (such as 20%). Accordingly, in a case where the output state of the ORC 13 is sufficient, and the amount of charge in the rechargeable battery 11 is not below the lower limit value, the rechargeable battery 11 may be charged with the output from the ORC 13. In this case, the grid power is not used for charging, and thus, power may be stably supplied to the ship power demand 5. In the case where the output state of the ORC 13 is at or greater than the predetermined output, and the amount of charge in the rechargeable battery 11 is at or greater than the lower limit value that is set in advance (such as 20%), the rechargeable battery 11 may alternatively be charged with the grid power.

Moreover, in the case where the output state of the ORC 13 is smaller than the predetermined output, the control device 15 charges the rechargeable battery 11 with both the output from the ORC 13 and the grid power. That is, in the case where the output state of the ORC 13 is not sufficient, the rechargeable battery 11 may be more swiftly charged using both the output from the ORC 13 and the grid power.

Next, control of the power supply system 10 by the control device 15 described above will be described with reference to Figs. 4 and 5. Flows shown in Figs. 4 and 5 are repeatedly performed at a predetermined control cycle in a case where the ship 1 is in operation (including when the ship is sailing or is at anchor). The flows in Figs. 4 and 5 assume a case where the amount of charge is sufficient (at or greater than the first predetermined value).

First, as shown in Fig. 4, in a case where the amount of charge in the rechargeable battery 11 is 90% (the threshold) or more (S101), the maximum permissible load of the diesel generator 12 is set to 85% (the first predetermined value) (S102). A case, in S101, where the amount of charge is at or greater than the threshold is a case where the amount of charge is at or greater than the threshold corresponding to the amount of charge greater than the required sudden load capacity. The threshold is set such that, when the ship power demand is increased in S104 described later, an increase in the ship power demand may be covered by discharging of the rechargeable battery 11 for a predetermined period of time. Then, output of the ORC 13 is transmitted to the grid 3 (S103).

Then, whether the ship power demand 5 is greater than the total output of the output from the diesel generator 12 (an upper limit of the output) and the output from the ORC 13 is determined (S104). The upper limit of the output corresponds to the maximum permissible load. In the case where the ship power demand 5 is not greater than the total output of the output from the diesel generator 12 and the output from the ORC 13 (determination of NO in S104), the process is ended.

In the case where the ship power demand 5 is greater than the total output of the output from the diesel generator 12 and the output from the ORC 13 (determination of YES in S104), the rechargeable battery 11 is discharged (S105).

Then, whether the amount of charge in the rechargeable battery 11 is equal to or smaller than the required sudden load capacity is determined (S107).

In the case where the amount of charge in the rechargeable battery 11 is not equal to or smaller than the required sudden load capacity (determination of NO in S107), S105 is repeated, and the rechargeable battery 11 is discharged. Then, moving to Fig. 5, in the case where the amount of charge in the rechargeable battery 11 is equal to or smaller than the required sudden load capacity (determination of YES in S107), the maximum permissible load of the diesel generator 12 is set to 50% (the second predetermined value) (S108).

Then, the auxiliary generator 14 is activated (S109). In parallel with S109, whether the output of the ORC 13 is 80% (the predetermined output) or greater is determined (S110). In the case where the output of the ORC 13 is not at or greater than 80% (the predetermined output) (determination of NO in S110), the rechargeable battery 11 is charged with both the output from the ORC 13 and the grid power (S114).

In the case where the output of the ORC 13 is 80% (the predetermined output) or greater (determination of YES in S110), whether the amount of charge in the rechargeable battery 11 is smaller than 20% (the lower limit value) is determined (S111). In the case where the amount of charge in the rechargeable battery 11 is smaller than 20% (the lower limit value) (determination of YES in S111), the rechargeable battery 11 is charged with both the output from the ORC 13 and the grid power (S112). In the case where the amount of charge in the rechargeable battery 11 is not smaller than 20% (the lower limit value) (determination of NO in S111), the rechargeable battery 11 is charged with the output from the ORC 13 (S113).

The control device 15 performs processes as shown in the flows in Figs. 4 and 5, and the power supply system 10 is thus controlled.

Next, control of the power conversion device 16 by the control device 15 will be described with reference to Fig. 1.

With the power supply system 10, there are a case of charging the rechargeable battery 11 using both the output from the ORC 13 and the grid power, a case of charging the rechargeable battery 11 with the output from the ORC 13, a case of transmitting output of the rechargeable battery 11 to the grid 3, a case of transmitting the output of the ORC 13 to the grid 3, and a case of transmitting both the output of the rechargeable battery 11 and the output of the ORC 13 to the grid 3. Flow of current to the inverter 17, the converter 18, and the converter 19 is assumed to be stopped when operation is stopped.

In the case of charging the rechargeable battery 11 using both the output from the ORC 13 and the grid power, the switch gear S4 is closed, AC/DC conversion is performed by the inverter 17, voltage conversion (supply of power to the rechargeable battery 11 side) is performed by the converter 18, and AC/DC conversion is performed by the converter 19, and the output from the ORC 13 and the grid power are thereby both supplied to the rechargeable battery 11.

In the case of charging the rechargeable battery 11 with the output from the ORC 13, the switch gear S4 is opened, the inverter 17 is stopped, voltage conversion (supply of power to the rechargeable battery 11 side) is performed by the converter 18, and AC/DC conversion is performed by the converter 19, and the output from the ORC 13 is thereby supplied to the rechargeable battery 11.

In the case of transmitting the output of the rechargeable battery 11 to the grid 3, the switch gear S4 is closed, DC/AC conversion is performed by the inverter 17, voltage conversion (transmission of power from the rechargeable battery 11 side) is performed by the converter 18, and the converter 19 is stopped, and the output of the rechargeable battery 11 is thereby transmitted to the grid 3.

In the case of transmitting the output of the ORC 13 to the grid 3, the switch gear S4 is closed, DC/AC conversion is performed by the inverter 17, the converter 18 is stopped, and AC/DC conversion is performed by the converter 19, and the output of the ORC 13 is thereby transmitted to the grid 3.

In the case of transmitting the output of the rechargeable battery 11 and the output of the ORC 13 to the grid 3, the switch gear S4 is closed, DC/AC conversion is performed by the inverter 17, voltage conversion (transmission of power from the rechargeable battery 11 side) is performed by the converter 18, and AC/DC conversion is performed by the converter 19, and the output of the ORC 13 and the grid power are both transmitted to the grid 3.

Grid power may be supplied to the rechargeable battery 11 by closing the switch gear S4, causing the inverter 17 to perform AC/DC conversion, causing the converter 18 to perform voltage conversion (supply of power to the rechargeable battery 11 side), and causing the converter 19 to stop.

The configuration of the power conversion device 16 is not limited to the one shown in Fig. 1 as long as power conversion and flow of current between the appliances can be controlled. Furthermore, the control method of the power conversion device 16 is not limited to the one described above.

Next, example operation of the ship (state of each appliance in relation to the ship power demand 5) will be described with reference to Figs. 6 and 7. Fig. 6 is a diagram showing example operation of a ship according to Reference Example. Reference Example is an example in which a sudden load is handled by two diesel generators (referred to as a first diesel generator and a second diesel generator), without using the rechargeable battery 11 (and the ORC 13). For example, in the case of Reference Example, operation is performed by limiting output of the two diesel generators (to 30% or the like of the rated output, for example) so as to handle the sudden load by the two diesel generators. Fig. 7 shows example operation of the ship 1 according to the present embodiment. In Figs. 6 and 7, a period Ta (a period during sailing) indicates "during sailing", a period Tb (a period of entrance into a harbor) indicates a case of entering a harbor, and a period Tc (a period of loading and unloading) indicates a case of performing loading and unloading (that is, a state of being at anchor). In Figs. 6 and 7, load of the propulsion main engine ("main engine load" in Figs. 6 and 7) is constant during sailing in the period Ta, is reduced due to deceleration at a time of entrance into a harbor in the period Tb, and is zero due to the propulsion main engine being stopped at a time of loading and unloading in the period Tc. In Figs. 6 and 7, same ship power demand 5 is assumed to be generated.

First, example operation of a ship (state of each appliance in relation to the ship power demand 5) according to Reference Example will be described with reference to Fig. 6. In Reference Example, the maximum permissible load is constant at 60% for the first diesel generator and the second diesel generator.

For example, at a time T1 in the period Ta during sailing, the ship power demand 5 is handled by the first diesel generator, and the second diesel generator is stopped. The ship power demand 5 increases from a time T2, and the increased ship power demand 5 is handled by both the first diesel generator and the second diesel generator. Then, when, at a time T5, the ship power demand 5 becomes constant and handling by the first diesel generator becomes possible, the second diesel generator is stopped.

At a time T6 in the period Tb for entrance into a harbor, the second diesel generator is activated in preparation for a sudden load that will occur due to the bow thruster or the like, and the first diesel generator and the second diesel generator are operated in parallel. Then, at a time T7, when the bow thruster is operated to approach a shore or the like, the ship power demand 5 is suddenly increased (occurrence of a sudden load). Accordingly, the sudden load is handled using both the first diesel generator and the second diesel generator that are being operated in parallel.

In Reference Example in Fig. 6, the first diesel generator and the second diesel generator are operated in parallel, and an amount of fuel consumption is great, and it is difficult to increase fuel efficiency. The first diesel generator and the second diesel generator have to be operated in parallel in preparation for a sudden load, and thus, output has to be limited at the time of parallel operation, and fuel efficiency tends to decrease.

Next, example operation of the ship 1 (state of each appliance in relation to the ship power demand 5) according to the present embodiment will be described with reference to Fig. 7. In the example in Fig. 7, the first predetermined value and the second predetermined value of the maximum permissible load of the diesel generator 12 are 85% and 50%, respectively. For example, when rated capacity is 500 kW, the capacity of the diesel generator 12 is 425 kW in the case of the first predetermined value, and 250 kW in the case of the second predetermined value. Rated capacity of the auxiliary generator 14 is 300 kW.

For example, at the time T1 in the period Ta during sailing, the ship power demand 5 is handled by the diesel generator 12 and the ORC 13. At this time, a charge rate of the rechargeable battery is at or greater than the threshold, and the maximum permissible load of the diesel generator 12 is set to the first predetermined value. Then, when the ship power demand 5 increases at the time T2, output of the diesel generator 12 is increased with the maximum permissible load as the upper limit of the output, and the increased ship power demand 5 is handled by the output from the diesel generator 12 and the output from the ORC 13. This case is a case where the total output of the output from the diesel generator 12 (the maximum permissible load) and the output from the ORC 13 is greater than the ship power demand 5, and discharge of the rechargeable battery 11 is not performed.

When the ship power demand 5 is further increased at a time T3, the ship power demand 5 becomes greater than the total output of the output from the diesel generator 12 (the maximum permissible load) and the output from the ORC 13, and the rechargeable battery 11 is discharged. That is, the ship power demand 5 is handled by the output from the diesel generator 12, the output from the ORC 13, and discharging of the rechargeable battery 11. Then, when the amount of charge in the rechargeable battery 11 falls to or below the required sudden load capacity at a time T4, the maximum permissible load of the diesel generator 12 is changed to the second predetermined value. The auxiliary generator 14 is activated. That is, the ship power demand 5 is handled by the output from the diesel generator 12 (the maximum permissible load is set to the second predetermined value) and the output from the auxiliary generator 14. The upper limit of the output of the auxiliary generator 14 is set to an equivalent load factor as the set value (the second predetermined value) of the maximum permissible load of the diesel generator 12. When the maximum permissible loads are made equivalent for the diesel generator 12 and the auxiliary generator 14, the load factor may be increased for the two with a good balance, and fuel efficiency may be increased. If the maximum permissible load of one of the generators is more increased than the maximum permissible load of the other of the generators (that is, the maximum permissible loads are not the same but are unbalanced), the generator for which lower maximum permissible load is set is possibly operated in a load range where the fuel efficiency is extremely poor. The rated capacity is different between the diesel generator 12 and the auxiliary generator 14, and thus, even if equivalent maximum permissible loads are set, outputs are different as shown in Fig. 7. Moreover, because the amount of charge in the rechargeable battery 11 is reduced to or lower than the required sudden load capacity, the rechargeable battery 11 is switched to be charged.

Then, at the time T5, the ship power demand 5 is reduced to be equivalent to the ship power demand 5 at the time T1, and the total output of the output from the diesel generator 12 (the maximum permissible load) and the output from the ORC 13 becomes greater than the ship power demand 5. At the time T5, the amount of charge in the rechargeable battery 11 becomes equal to or greater than the threshold, and the maximum permissible load of the diesel generator 12 is set to the first predetermined value. The auxiliary generator 14 is stopped. The auxiliary generator 14 may be stopped when the total output of the output from the diesel generator 12 (the maximum permissible load) and the output from the ORC 13 becomes greater than the ship power demand 5, or may be stopped when the amount of charge in the rechargeable battery 11 becomes equal to or greater than the threshold.

At the time T6 in the period Tb for entrance into a harbor, the output of the ORC 13 is reduced to enter a harbor (to be stopped), and the output of the diesel generator 12 is increased to handle the ship power demand 5. Then, at the time T7, when the bow thruster is operated to approach a shore or the like, the ship power demand 5 is suddenly increased (occurrence of a sudden load). Accordingly, power for handling the sudden load is output to the grid 3 by rapid discharging of the rechargeable battery 11.

In the present embodiment, as shown in Fig. 7, each appliance is operated according to the ship power demand 5, and power is appropriately supplied to the grid 3.

At the time T1, the ship power demand 5 is handled in Reference Example in Fig. 6 by the first diesel generator (one appliance), and the ship power demand 5 is handled in the present embodiment in Fig. 7 by the diesel generator 12 and the ORC 13. In the present embodiment, because the ORC 13 is used in combination, the output of the diesel generator 12 is reduced, and fuel efficiency of the diesel generator 12 itself is possibly reduced. However, because the ORC 13 is used and power to be generated at the diesel generator 12 may be reduced by the amount of power that is obtained by the ORC 13 (the amount of power obtained by heat recovery), consumption of fuel by the diesel generator 12 may be reduced. That is, because the amount of fuel to be consumed may be reduced as a whole, overall fuel efficiency may be increased.

By setting high maximum permissible load at the time T2 based on the charge rate of the rechargeable battery 11, the diesel generator 12 may be operated at an operating point with good efficiency.

At the time T3, the ship power demand 5 is handled by the output from the diesel generator 12, the output from the ORC 13, and discharging of the rechargeable battery 11. Accordingly, even when the maximum permissible load of the diesel generator 12 is set high, an increase in load may be more reliably handled by discharging of the rechargeable battery 11.

In the present embodiment, as shown in Fig. 7, in the case where the amount of charge in the rechargeable battery 11 falls to or below the required sudden load capacity at the time T4, the rechargeable battery 11 is charged, and the amount of charge in the rechargeable battery 11 may be more reliably maintained at or greater than the required sudden load capacity. Because the diesel generator 12 and the auxiliary generator 14 are used in combination to handle the ship power demand 5, and the load factors as the upper limits of output are made equivalent for the diesel generator 12 and the auxiliary generator 14, the load factors may be increased in a balanced manner, and fuel efficiency may be increased.

In the present embodiment, because the diesel generator 12 and the ORC 13 are used in combination as shown in Fig. 7, at the time T6, power to be generated at the diesel generator 12 may be reduced by the amount of power that is obtained by the ORC 13 (the amount of power obtained by heat recovery), and thus, consumption of fuel by the diesel generator 12 itself may be reduced. That is, the amount of fuel to be consumed may be reduced as a whole, and overall fuel efficiency may be increased.

In the present embodiment, as shown in Fig. 7, a sudden load at the time T7 is handled by discharging of the rechargeable battery 11, and thus, the sudden load may be swiftly and stably handled. In Reference Example, as shown in Fig. 6, a sudden load is handled by the first diesel generator and the second diesel generator, and thus, the two have to be operated in a low load range with poor fuel efficiency in preparation for a sudden load. In the case where output of a generator is drastically increased, black smoke is possibly caused. However, by using the rechargeable battery 11 as in the present embodiment, an appliance load on the diesel generator 12 may be suppressed, and a sudden load may be stably handled.

As described above, with the power supply system and the ship, the control method and the control program according to the present embodiment, the rechargeable battery 11 and the diesel generator 12 that generates power using the internal combustion engine are connected to the grid 3, and the maximum permissible load that is the upper limit value of the output of the diesel generator 12 is set according to the amount of charge in the rechargeable battery 11. Accordingly, the maximum permissible load of the diesel generator 12 may be appropriately set, and power may be efficiently generated using the internal combustion engine. For example, in the case where the amount of charge in the rechargeable battery 11 is great, a sudden load may be handled also by discharging of the rechargeable battery 11, and the diesel generator 12 does not have to be operated in a low load range with poor efficiency in preparation for a sudden load. That is, the maximum permissible load of the diesel generator 12 may be set high to thereby increase fuel efficiency of the internal combustion engine.

In the case where the amount of charge is equal to or greater than the threshold that is set in advance, the maximum permissible load is set to the first predetermined value, and in the case where the amount of charge is smaller than the amount of charge corresponding to the threshold and equal to or smaller than the required sudden load capacity that is set in advance in relation to a sudden load that is expected, the maximum permissible load is set to the second predetermined value that is set to a value smaller than the first predetermined value. The maximum permissible load of the diesel generator 12 may thus be appropriately set according to the amount of charge. Accordingly, fuel efficiency of the internal combustion engine may be increased.

Because the rechargeable battery 11 is discharged in a case where the total output of the output from the diesel generator 12 and the output from the ORC 13 that generates power by heat recovery becomes smaller than the ship power demand 5, a sudden load may be handled by using the rechargeable battery 11.

Because the rechargeable battery 11 is charged with at least one of the output from the ORC 13 and the grid power depending on the output state of the ORC 13, the rechargeable battery 11 may be efficiently charged while taking the output state of the ORC 13 into account.

Because, in a case where the output state of the ORC 13 is equal to or greater than predetermined output, the rechargeable battery 11 is charged with at least one of the output from the ORC 13 and the grid power depending on the amount of charge, the rechargeable battery 11 may be efficiently charged while taking the amount of charge into account. In a case where the output state of the ORC 13 is smaller than the predetermined output, the rechargeable battery 11 is charged with both the output from the ORC 13 and the grid power, and thus, the rechargeable battery 11 may be efficiently charged even when the output state of the ORC 13 is smaller than the predetermined output.

The auxiliary generator 14 is activated in a case where the amount of charge in the rechargeable battery 11 falls to or below the required sudden load capacity that is set in relation to a sudden load that is expected in advance. Because activation of the auxiliary generator 14 takes time, a sudden load is handled by the diesel generator 12 (where the maximum permissible load is set to the second predetermined value) when activation of the auxiliary generator 14 is not completed. In a case where activation of the auxiliary generator 14 is completed before occurrence of a sudden load, the sudden load may be handled by the diesel generator 12 and the auxiliary generator 14.

The present invention is not limited to the embodiment described above, and various modifications may be made within the scope of the invention.

### [Reference Signs List]

- 1: ship
- 2a: organic fluid circulation flow line
- 2b: evaporator
- 2c: power turbine
- 2d: generator
- 2e: condenser
- 2f: circulation pump
- 3: grid
- 5: ship power demand
- 6: cooling water circulation line
- 10: power supply system
- 11: rechargeable battery
- 12: diesel generator
- 13: ORC
- 14: auxiliary generator
- 15: control device
- 16: power conversion device
- 17: inverter
- 18: converter
- 19: converter
- S1, ..., S4: switch gear
- Ta: period during sailing
- Tb: period of entrance into harbor
- Tc: period of loading and unloading

## Claims

1. A power supply system comprising:
a rechargeable battery that is connected to a grid;
a generator that is connected to the grid, and that generates power using an internal combustion engine; and
a control device that sets a maximum permissible load according to an amount of charge in the rechargeable battery, the maximum permissible load being an upper limit value of output of the generator.

2. The power supply system according to claim 1, wherein the control device sets the maximum permissible load to a first predetermined value in a case where the amount of charge is greater than a required sudden load capacity that is set in advance in relation to a sudden load that is expected, and sets the maximum permissible load to a second predetermined value that is set to a value smaller than the first predetermined value, in a case where the amount of charge is equal to or smaller than the required sudden load capacity.

3. The power supply system according to claim 2, wherein the control device sets the maximum permissible load to the first predetermined value in a case where the amount of charge is equal to or greater than a threshold that is set in advance, and sets the maximum permissible load to the second predetermined value in a case where the amount of charge is smaller than the amount of charge corresponding to the threshold and equal to or smaller than the required sudden load capacity.

4. The power supply system according to any one of claims 1 to 3, comprising a power generation unit that is connected to the grid and the rechargeable battery, and that generates power by heat recovery, wherein
the control device discharges the rechargeable battery in a case where total output of output from the generator and output from the power generation unit becomes smaller than a required load on the grid side.

5. The power supply system according to claim 4, wherein the control device charges the rechargeable battery with at least one of the output from the power generation unit and grid power depending on an output state of the power generation unit.

6. The power supply system according to claim 5, wherein the control device charges the rechargeable battery with at least one of the output from the power generation unit and the grid power depending on the amount of charge, in a case where the output state of the power generation unit is equal to or greater than predetermined output, and charges the rechargeable battery with both the output from the power generation unit and the grid power in a case where the output state of the power generation unit is smaller than the predetermined output.

7. The power supply system according to any one of claims 1 to 6, comprising an auxiliary generator that is connected to the grid, wherein
the control device activates the auxiliary generator in a case where the amount of charge falls to or below a required sudden load capacity that is set in advance in relation to a sudden load that is expected.

8. The power supply system according to claim 7, wherein the control device sets an upper limit value of output of the auxiliary generator to be equivalent to the maximum permissible load of the generator.

9. The power supply system according to claim 7 or 8, wherein capacity of the auxiliary generator is smaller than capacity of the generator.

10. A ship comprising the power supply system according to any one of claims 1 to 9.

11. A control method of a power supply system including a rechargeable battery that is connected to a grid, and a generator that is connected to the grid and that generates power using an internal combustion engine, the control method comprising setting a maximum permissible load according to an amount of charge in the rechargeable battery, the maximum permissible load being an upper limit value of output of the generator.

12. A control program of a power supply system including a rechargeable battery that is connected to a grid, and a generator that is connected to the grid and that generates power using an internal combustion engine, the control program being for causing a computer to perform a process of setting a maximum permissible load according to an amount of charge in the rechargeable battery, the maximum permissible load being an upper limit value of output of the generator.
